(19) Europäisches Patentamt
European Patent Office
Office européen des brevets

(11) **EP 1 763 248 A1**

(12) **EUROPEAN PATENT APPLICATION**

(43) Date of publication:
**14.03.2007 Bulletin 2007/11**

(51) Int Cl.:
**H04N 7/26** (2006.01)

(21) Application number: **05019887.8**

(22) Date of filing: **13.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SIEMENS AKTIENGESELLSCHAFT 80333 München (DE)**

(72) Inventors:
• **Correia, Américo**
  **2855-572 Corroios (PT)**
• **Marquet, André**
  **1150-142 Lisboa (PT)**
• **Martins, Nuno**
  **2720 Reboleira-Amadora (PT)**

Remarks:
Amended claims in accordance with Rule 86 (2) EPC.

(54) **Computation of subjective video quality**

(57) Measuring quality of video content by determining an objective quality result of the video content. A first subjective quality result of the video content is determined. Objective and first subjective quality results that have a substantially linear correlation are selected. Then, a second subjective quality result is extracted using a transfer function from the objective quality result.

FIG 12A

Suzie-QCIF at 10 Hz

H.264 BL

MPEG-4 SP

PSNR [dB] vs Bit-rate [bps] ×10⁴

**(Cont. next page)**

EP 1 763 248 A1

**FIG 12B**

Grandma-QCIF at 10 Hz

H.264 BL

MPEG-4 SP

PSNR [dB]

Bit-rate [bps]

$\times 10^4$

**FIG 12C**

Mother-QCIF at 10 Hz

H.264 BL

MPEG-4 SP

PSNR [dB]

Bit-rate [bps]

$\times 10^4$

**FIG 12D**

Carphone-QCIF at 10 Hz

H.264 BL

MPEG-4 SP

PSNR [dB]

Bit-rate [bps]

$\times 10^4$

**Description**

Video delivery platforms upholds in compression techniques to reduce the amount of required bit rate while decreasing the quality of the video sequence because it introduces loss of information. The problem in this scenario is to determine the quality of the video reproducing the Human Visual System (HVS), after applying compression techniques. Determining the quality of a video output after encoding is a classical problem of the video compression community and there is no agreement on a metric that reproduces the HVS perception of quality. There are some basic fidelity models like Mean-Squared Error (MSE), Peak Signal-to-Noise Ratio (PSNR) or Sum of All Distortions (SAD) which do not necessarily correlate with perceived quality thus models to represent human perception of impairments are needed [1 3GPP TS 23.246 v6.2.0 Multimedia broadcast multicast service (MBMS); architecture and functional description].

The resolution of the foregoing problems would be particularly interesting for video streaming, especially for the wireless environment. For example, in wireless Wide Area Networks (WAN) bandwidth is a scarce resource. Hence, it is of utmost interest to assure efficient source signal compression in unicast and multicast streaming applications scenarios. An important point regarding efficient source signal compression is that a satisfactory quality of the video should be preserved. In other words, a savings of bandwidth is paramount to compression but should not sacrifice video quality.

To provide a multimedia delivery platform for UMTS, the Third Generation Partnership Project (3GPP) addressed the question of Multimedia delivery with the introduction of the Multimedia Broadcast and Multicast Services (MBMS) [1]. This framework should include network functionalities that will allow higher network resources usage efficiency both in the core network but most importantly in the air interface, where the bottleneck is placed. If MBMS succeeds, UMTS will soon become attractive as a video delivery platform eventually competing with terrestrial, satellite and mobile distribution schemes such as the Digital Video Broadcast (DVB) for the TV market.

While currently, common channels are being considered for multimedia delivery downlink shared channels are being studied to the delivery of multimedia streaming services in order to allow better radio resources usage. In this context High-Speed Downlink Packet Access (HSDPA) [2, 3GPP TS 25.308 V6.1.0 High Speed Downlink Packet Access (HSDPA), overall description, Stage 2, (Release 6)] is being considered because of its flexibility. Some work around multimedia and streaming applications aim to define the technological approaches that will enable UMTS based mobile networks to seamlessly deliver video streams to end-users with different quality modes, so as to deal with the heterogeneous channel conditions experienced in mobile communications environments.

There is still and open-ended period on the adoption of a suitable source encoding tool and the MPEG-4 and H.264 are the state of the art standard video coding tools therefore appear as good candidates for source encoding in wireless environments. It is an ISO/IEC video standard developed by Moving Pictures Expert Group (MPEG) and succeeds previous ones such as H.261, H.263 and MPEG-2. Its dissemination is upheld by a mature technology, plenty of information and codec implementations resulting in functional applications, thus bringing new multimedia opportunities, specifically for low bit rate applications, mobile broadcast and multicast. In 2001, MPEG and Video Coding Experts Group ITU-T (VCEG) joined themselves in Joint Video Team (JVT) aiming to develop a new compression standard for moving images, called Advanced Video Coding (AVC) and later incorporated in MPEG-4/Part10. This JVT continued the work initiated by VCEG in H.26L, now H.264.

The AVC standard final draft for International Organization for Standardization (ISO) approval was submitted in July 2003.

In order to accommodate either encoding tool, MPEG-4 Simple Profile (SP) and H.264 Baseline (BL) [3, Coding of AudioVisual Objects-Part 2: Visual, ISO/IEC JTC1, ISO/IEC 14 496-2 (MPEG-4 visual version 1), 1999.], [4,Draft ITU-T Recommendation and Final Draft International Standard of Joint Video Specification (ITU-T Rec. H.264 I ISO/IEC 14496-10 AVC)] both are considered here particularly with the objective of estimating quality. The bandwidth savings are also considered also in terms of the range of bit rates in the range of downlink shares channels between 128 and 512 Kbps. It should not be assumed that the invention, however, is limited to any of these mentioned protocols or projects, but that they are discussed here as a basis for understanding the invention.

There are two known approaches to estimate quality, specifically objective and subjective. The objective approach uses mathematical methodologies and the subjective puts, under some specific screening and laboratory conditions, a universe of subjects evaluating video sequences. Specifically, there are two methods widely used in the video quality community, the Peak Signal-to-Noise Ratio (PSNR) for the objective assessment and the ITU Recommendation BT-500 for the subjective evaluation.

The PSNR per frame measures the average cumulative square error between reference and reproduction frame in relation to the peak signal, as in equation 1. Where, $V_k$ (x,y) is the luminance values for each pel, $m$ is the number of horizontal pels, $n$ is the number of vertical pels and $N$ are the number of frames. Focusing the analysis on the luminance considering 8 bits per sample signals the peak signal is 255.

$$PSNRperframe(x, y) = \left( \sum_{I=0}^{N-1} 20 \log_{10} \left( \frac{255}{\sqrt{\frac{1}{nm} \sum_{i=0}^{n} \sum_{j=0}^{m} \left[ V_i(x, y) - V_j(x, y) \right]^2}} \right) \right) \Bigg/ N$$

(1)

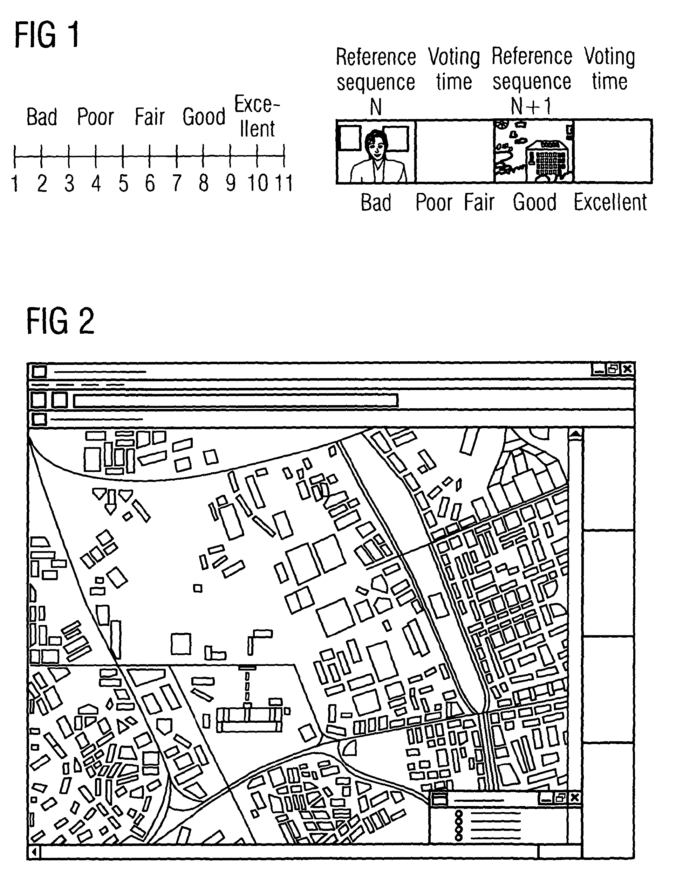

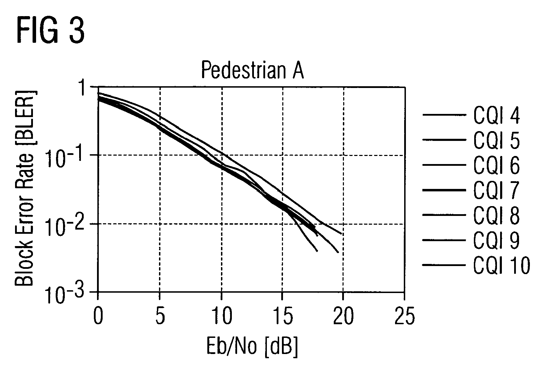

The subjective evaluation should be conducted according to ITU recommendation which defines the screening of the subjects, the laboratory conditions and the presentation of the stimulus. Besides that, it should be conducted jointly with psychology experts to help screen the universe of subjects to be presented with the stimulus. The set of video sequences can be presented to the audience based on the single-stimulus method described in the ITU recommendation and the subjects are expected to vote on a linear scale from 1, standing for bad quality, to 11 for excellent. The evaluation scale and the single-stimulus are depicted in Fig. 1.

The ITU recommendation also provides information on statistical methods to analyse collected data from the tests. However, one problem is that it does not define a normative approach to analyse the results. Another problem is that determining the video quality has been typically addressed using objective metrics which provides a quantitative estimation of quality. However, it is widely accepted that objective metrics fails in the lack of significance because it does not take into account the spatial-temporal property of HVS [H.264 and MPEG-4, Richardson, I., Wiley, 2003].

On the other hand, there are some methods which incorporate quality measures by considering HVS error sensitivity paradigm [The Handbook of Video Databases: Design and Applications, Furht B., Marqure O., ed., CRC Press, pp. 1041-1078, September 2003]. In any case, the above-described subjective evaluation is still the predominant approach, despite that it is very time consuming and has several constraints that make it difficult to reproduce.

Until now there have been only isolated objective and subjective assessments and no work regarding the correlation of both. Nor has there been a satisfactory solution of procuring a subjective evaluation. What is needed is a better and consistent assessment methodology. Further, there should be discovered a way in which to correlate these results. In addition, procuring the subjective evaluation is lacking in the art.

Summary of the Invention

The present invention is achieved by measuring a quality of video content by determining an objective quality result of the video content. A first subjective quality result of the video content is determined. Objective and first subjective quality results that have a substantially linear correlation are verified. Then, a second subjective quality result can be extracted using a transfer function from the objective quality result.

Detailed Description

In developing a correlation of the objective and subjective signals, a complete analysis of these signals is herein set forth. The correlation will be used to formulate a transform that extracts the subjective signal and possible applications are provided. In doing so the MPEG-4 SP and the H.264 BL standards are examined in terms of rate-distortion efficiency, via objective metrics, and subjective quality assessment across the range of the HSDPA channels bit rates, selecting reference values between 128 and 512 kbps. Here is presented the MPEG procedure and analysis tools for quality estimation. However, it will be appreciated that the present invention is not limited to these specifically mentioned protocols and that these are here simply for example.

First, the procedure for obtaining an assessment of the objective signal is discussed. Most procedures for video analysis focus the usage of YUV color space because encoders work in that space. Thus, the comparison here will be accomplished in the YUV color space. The study focuses on the analysis of luminance (Y) since the Human Visual System (HVS) seems to be more sensitive to this component than to chrominance (U and V) components. The metric adopted for objective assessment is PSNR, which measures the cumulative square error between reference and reproduction picture in relation to the peak signal. In this context, the signal is the original message and the noise error added in the reconstruction.

The rate-distortion analysis set forth below will focus on practical video streaming and videoconferencing scenarios that were conducted for the purpose of this analysis. The videoconferencing scenario allows validating the trial, comparing the results with analogous existing literature. The objective videoconferencing results are presented in Appendix I. In regards to the streaming scenario, besides rate-distortion analysis, the subjective evaluation is also performed because this was the target scenario to study. Issues in the evaluation were setting the input image sequences, the target bit rates and video coder bit-rate control. Appropriate content was selected to represent the scenario, encompassing a variety of application environments, specifically using sequences with different degrees of motion and picture detail. These sequences are referred in Appendix II - Table XI. The video coder bit-rate control was achieved by tuning the quantization parameter using a variable bit-rate control mechanism, targeting the bit rates for streaming evaluation scenario shown is Table I. The obtained bit-rates after the encoding are presented in Appendix II - Table XII.

TABLE 1 BIT RATES FOR VIDEO STREAMING SCENARIO

| *Sequence Grouping* | *Bit rate [kbps]* | | | |
|---|---|---|---|---|
| Video Streaming | *128* | *256* | *384* | *512* |

For the streaming scenario Common Intermediate Format (CIF) with an Intra period of 30 was adopted, both for MPEG-4 and H.264. The bit rates were selected considering the expected bit rates in UMTS downlink shared channels. The encoding parameters for MPEG-4 and H.264 are presented in Table II.

TABLE 2 MPEG-4 SP AND H.264 BL ENCODING PARAMETERS

| Parameter | Value |
|---|---|
| **A: MPEG-4 SP** | |
| *Encoding* | VBR |
| *Quantization Type* | H.263/ MPEG-4 |
| *Number of reference frames* | 1 |
| **B: H.264 BL** | |
| *Motion Search* | Fine (4x4 pels) |
| *Search Range* | 16 pels |
| *Number of reference frames* | 5 |
| *Output Type* | Annex B |

A subjective assessment was also conducted targeting the streaming scenario according to ITU recommendation [10, Rec. ITU-R BT.500-11, Methodology for the subjective assessment of the quality of television pictures (Question ITU-R 211/11), latest revision 2002]. Though the recommendation adopted for subjective assessment provides information on statistical methods to analyse the data collected from the tests, it does not define a normative approach to analyse evaluation results for its treatment. Therefore, the authors of the instant invention present two approaches for analysis and benchmark the results through correlation methods against objective metrics. The subjective evaluation was carried out because measuring bit rates against PSNR provides a quantitative estimation of quality but it fails in the lack of significance of the results. The subjects were selected among a college students environment, generally accepted as an early technology adopters group [11, Ling, R., "We release them by little: maturation and gender identity as seen in the use of mobile telephony, Historical, Societal and Professional Prespectives." Proceedings. 1999 International Symposium on, 29-31 July 1999].

To the subjects was applied a questionnaire to validate the universe submitted to the video trial evaluation. The entire subjective analysis procedure, including the questionnaire elaboration and posterior analysis was carried out in collaboration with experts from LAPSO, the applied group psychology laboratory from ISCTE. When subjective tests are aimed at estimating the evaluation of the typical user, the subjects who participate in a viewing test should not be directly concerned with video quality as part of their normal work nor should they be experienced assessors. In short, they should be non-experts [12, Pereira, F., Ebrahimi, T., The MPEG-4 Book, Prentice Hall PTR, 2002].

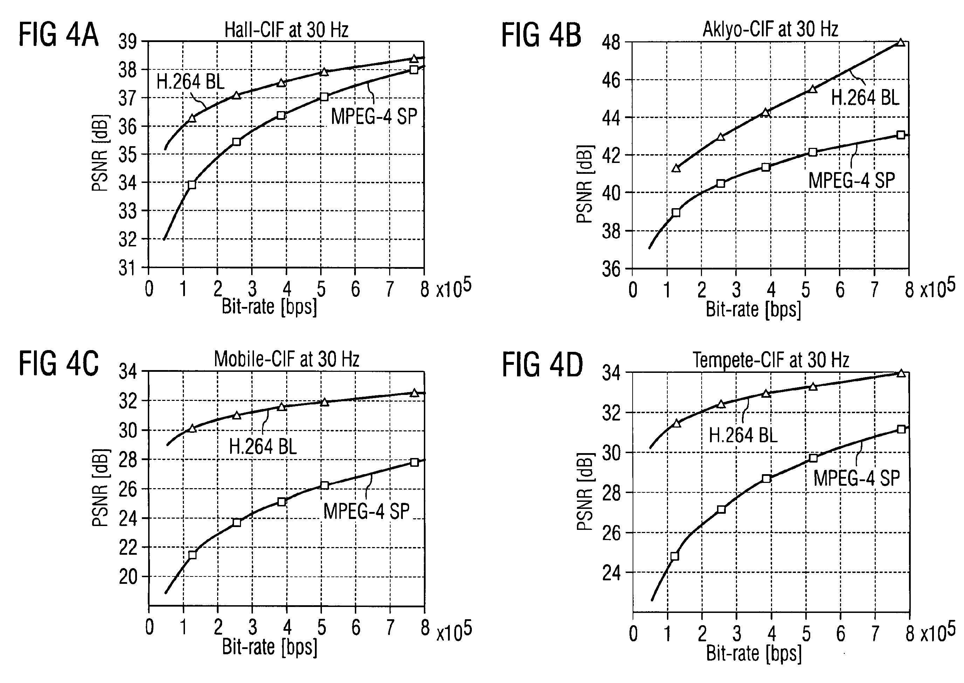

Prior to the test, subjects could be screened for visual acuity by using, for example, a Monoyer Optometric Table, and for normal color vision using Ishihara's tables. None of these tests were performed because it was considered, jointly with LAPSO experts, that an extensive inquiry was enough to discriminate persons with visual deficiency. During the selection process special care was put on screening subjects that have no visual shortage and are non-experts, thus not able to interpret lossy video compression phenomena but only to perceive the effects on visual quality. The audience was presented with a set of sequences based on the single-stimulus method as described in ITU recommendation. The same set of sequences used in the objective assessment was presented to the audience and the subjects where expected to vote on a linear scale from 1, standing for bad quality, to 11 for excellent, as depicted in Fig. 1 (Left Side). The procedure includes the presentation of a dummy sequence to stabilize viewer's reference, which results were not considered. In the featured stimulus after each sequence presentation follows an 8 second midgray period voting time, as depicted in Fig. 1 (Right Side). Fig 4 illustrates the objective rate distortion curves for each movie.

Now a concise explanation of the analysis of the Objective Assessment will be set forth. A quality estimation analysis between two video tools compliant with a profile should be considered as a tradeoff between quality and compressed bit rate. The quality can either be measured in terms of objective or subjective evaluations. For objective evaluation, rate-distortion curves describe the tradeoff between these two variables, quality and bit rate. Plotting PSNR against the encoded bit rate produces a rate distortion curve. Considering that the analysis focuses on the luminance component with 8 bit per sample signals, the peak signal is 255. The image distortion is presented in terms of PSNR per frame in decibels. The formula comes as,

$$PSNRperframe(x, y) = \left( \sum_{I=0}^{N-1} 20 \log_{10} \left( \frac{255}{\sqrt{\frac{1}{nm} \sum_{i=0}^{n} \sum_{j=0}^{m} \left[ V_i(x,y) - V_j(x,y) \right]^2}} \right) \right) \Bigg/ N \tag{1}$$

Turning now to the Subjective Evaluation Analysis, two proposed Methods A and B are concisely set forth. In the Method A approach, the collected data is analysed considering a confidence interval of 95% to compensate mean score evaluation error. The data tendency is given by a trend line within the mean score bounded by the confidence intervals. Regressive analysis is then applied to data points in order to attain the mean score results for the reference bit rates. The method yields the results of subjective evaluation scores and calculates the mean score and the standard deviation for each presentation, given by Eq. 2 and Eq. 3, respectively.

$$\overline{u}_{jkr} = \frac{1}{N} \sum_{i=1}^{N} u_{ijkr} \tag{2}$$

$$S_{jkr} = \sqrt{\sum_{i=1}^{N} \frac{\left( \overline{u}_{jkr} - \overline{u}_{ijkr} \right)^2}{(N-1)}} \tag{3}$$

The mean score and the dispersion of the results, given by the mean and the standard deviation, allowed presenting the results with a confidence interval of 95% associated to each mean score, as in Eq. 4.

$$\delta_{jkr} = 1.96 \frac{S_{jkr}}{\sqrt{N}} \, , \qquad \left[ \overline{u}_{jkr} - \delta_{jkr}, \overline{u}_{jkr} + \delta_{jkr} \right] \tag{4}$$

In a second Method B, data from both the outliers filtered bank and non-filtered is used. Outliers being those values that stay out of the 95% confidence interval. The confidence interval is computed as explained in Eq. 4, for each sequence/test condition pair. In this study, the outliers are considered as those scores outside the scope of the CI, the usage of outliers in psychometric studies is a widely accepted procedure to the inherent nature of this tests and the subjects psycho-responses [13, Patrick Brun, Gert Hauske, and Thomas Stockhammer, "Subjective Assessment of H. 264/AVC Video for Low-Bitrate Multimedia Messaging Services", IEEE International Conference on Image Processing, 2004] and [14, Gert Hauske, Thomas Stockhammer, and Rolf Hofmaier, "Subjective Image Quality of Low-Rate and Low-Resolution Video Sequences", 8th International Workshop on Mobile Multimedia Communications, 2003].The mean score is then computed for the raw data bank for each sequence/test condition pair for all observers, according to Eq.2.

The power fitting model $a^b$ was used for both mean score values and outliers. In this method data from both the outliers filtered bank, represented in algorithm Fit_Power_Model_Select as vector Mean and the non filtered bank (MeanFiltered) is used according to a "decisioning" algorithm that selects values from each depending of their closeness to fit. This process, set forth in code below, has the property of always encompassing the widest data range from the obtained data, i.e. it includes the minimum and maximum values.

```
Process Fit_Power_Model_Select

    Step1:

    /*Decision on the first value of the Mean Score*/

    if MeanFiltered_First < Mean_First

    then

        MeanScore_First = MeanFiltered_First

    else

        MeanScore_First=Mean_First

    end


    Step2:

    /*Decision on the last value of the Mean Score*/

    if MeanFiltered_Last < Mean_Last

    then

        MeanScore_Last = MeanFiltered_Last

    else

        MeanScore_Last = Mean_Last

    end


    Step3:

    /*Decision on the intermediate values*/

    for i=2 up to i < MeanScore_Size

        if MeanScore_Element[i-1]<= Mean_Element[i] or MeanScore_Element[i-1]<= MeanFiltered_Element[i]

        then

            MeanScore_Element[i]= minimum(Mean_Element[i], MeanFiltered_Element[i])

        Else

            MeanScore_Element[i]= maximum(Mean_Element[i], MeanFiltered_Element[i])

        End

    end


    end
```

Here, the results for the objective and the subjective results targeting the streaming scenario are presented.

First, the objective evaluation is discussed. The metrics were computed for the PSNR per frame. Since the scalar quantization of the VBR rate control mechanism of both codecs revealed a considerable targeted bit rate deviation curve fitting was applied to extrapolate the PSNR values for the reference bit rates. The rate-distortion curves were attained modelling a power function with the exception of H.264 rate-distortion curve for Akiyo that was modelled as a linear interpolation, to minimize fitting error. These rate-distortion curves are presented in Fig. 4a - 4d. From the metrics results it is possible to observe that the H.264 BL achieved better rate-distortion thus MPEG-4 SP is outperformmed in all tested sequences. The rate-distortion curves allowed computing PSNR values for the target reference bit-rates, summarized in Table I. An intra-clustering analysis[1] indicates that the disparity between PSNR values for H.264 BL and MPEG-4 SP diminishes when bit-rate increases.

[1] A composite analysis for a specific application.

TABLE III. MPEG-4 SP AND H.264 BL PSNR FOR THE VIDEO STREAMING

| REFERENCE BIT-RATE | | | | | | | | |
|---|---|---|---|---|---|---|---|---|
| Sequence | 128 kbps | | 256 kbps | | 384 kbps | | 512 kbps | |
| | *MPEG -4* | *H.26 4* | *MPEG -4* | *H.26 4* | *MPEG -4* | *H.26 4* | *MPEG- 4* | *H.26 4* |
| Hall | 33.89 | 36.23 | 35.44 | 37.04 | 36.37 | 37.52 | 37.05 | 37.8 |
| Mobile | 21.45 | 30.01 | 23.69 | 30.90 | 25.12 | 31.44 | 26.17 | 31.83 |
| Akiyo | 38.96 | 41.23 | 40.51 | 42.97 | 41.44 | 44.22 | 42.12 | 45.47 |
| Tempete | 24.98 | 31.43 | 27.23 | 32.36 | 28.65 | 32.9 2 | 29.69 | 33.32 |
| | | | | | | | | |

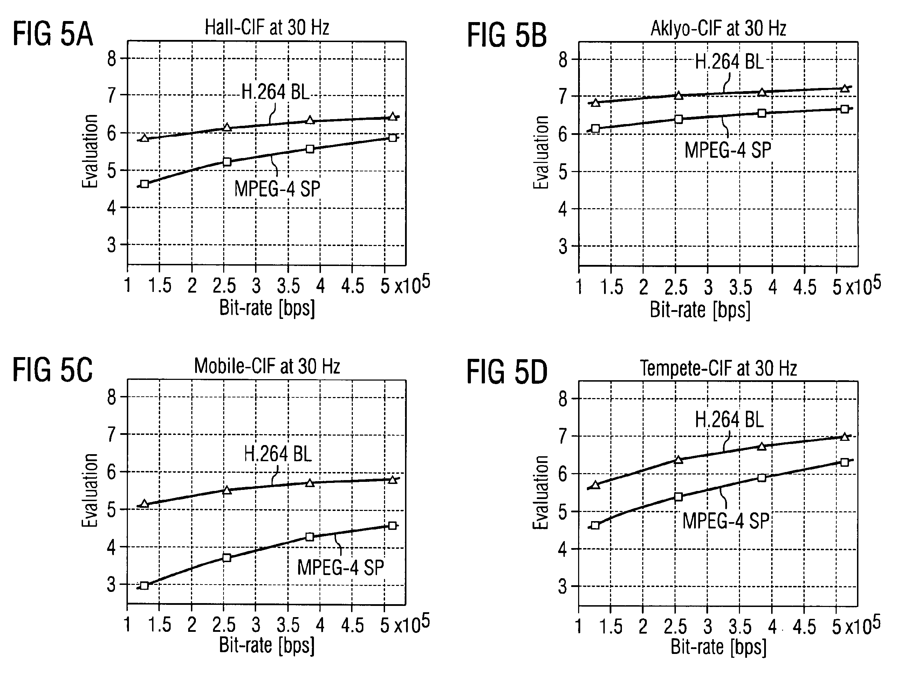

Now the discussion turns to the subjective analysis, Method A. In regard to the trend values, within the mean score bounded by the confidence interval, a regressive analysis was performed and the best fit was achieved modelling a power function. As for objective evaluation, the MPEG-4 SP is outperformed by the H.264 BL in all of the analysed sequences. The disparity of the evaluation scores tend to diminish when the bit rate increases. This behavior is more evident for Mobile, a complex sequence with random motion and picture detail, with a H.264 BL difference of more than 2.08 in evaluation at 128 kbps and 1.22 at 512 kbps. In the opposite, the Akiyo sequence maintains a roughly constant difference between MPEG-4 SP and H.264 BL. The results are depicted in Figs. 5a - d. The evaluation results reveal to be consistent with the objective ones and for the reference bit rates are shown in Table V.

TABLE IV. MPEG-4 SP AND H.264 BL SUBJECTIVE RESULTS FOR THE VIDEO STREAMING REFERENCE BIT-RATE

| Sequence | 128 kbps | | 256 kbps | | 384 kbps | | 512 kbps | |
|---|---|---|---|---|---|---|---|---|
| | MPEG-4 | H.264 | MPEG-4 | H.264 | MPEG-4 | H.264 | MPEG-4 | H.264 |
| Hall | 4.60 | 5.79 | 5.19 | 6.08 | 5.56 | 6.26 | 5.84 | 6.38 |
| Mobile | 3.06 | 5.14 | 3.77 | 5.48 | 4.25 | 5.69 | 4.63 | 5.85 |
| Akiyo | 6.12 | 6.79 | 6.38 | 6.98 | 6.54 | 7.09 | 6.66 | 7.17 |
| Tempete | 4.66 | 5.67 | 5.38 | 6.29 | 5.85 | 6.69 | 6.22 | 6.98 |

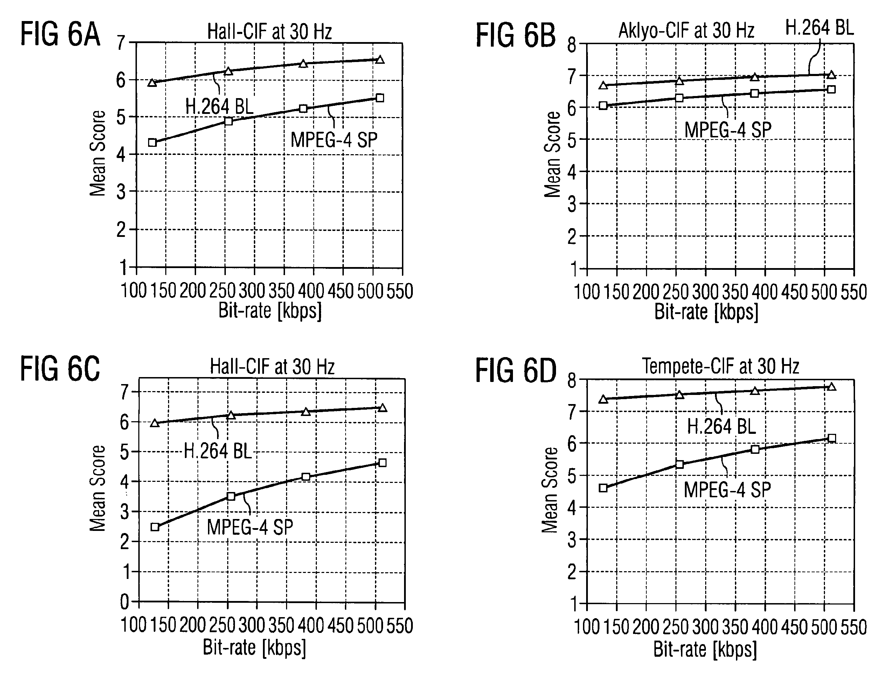

Now turning to the Method B of the subjective analysis, rate-distortion curves were fitted in order to represent the subjective mean score for the specified reference bit rates. The power model function revealed to be the best fit for all sequences. These curves are depicted in Figs. 6a - d. H.264 achieved higher mean scores than MPEG-4 in all tested sequences. Mobile coded at 128 kbps was the poorest performer scoring 3.06 (bad quality) very distant from the second worst classified Hall at 128 kbps, yet Mobile sequence presents a remarkable improvement in video quality as bit rate increases scoring 5.85 when coded at 512 kbps, this represents a 2.79 increase in the mean score, the greatest of all sequences. A probable explanation is the fact that Mobile is a highly complex scene, with lots of movement and very detailed contents.

While having always the worst record it has greater potential for quality increase, this contrast with Akiyo sequence which starts with a remarkable 6.12 score (good quality) when coded at 128 kbps and only increases to 7.17, staying in the same quality zone despite the dramatic increase in the bit rate by than four fold. Interestingly, Hall and Tempete perform very similarly to each other, although Hall tends to stabilize sooner having 512 kbps coded sequence performed marginally better that 384 kbps. It is reasonable to assume the fact that Hall video source is intended to simulate non-professional equipment, with coarse granularity and some visible noise added to original capture, constitute by itself an unpleasant experience to subjects, note that Hall does not show this characteristic in the objective results as the original picture is used as reference.

TABLE V. MEG-4 SP AND H.264 BL MEAN SCORE FOR THE VIDEO STREAMING REFERENCE BIT-RATES

| Sequence | 128 kbps | | 256 kbps | | 384 kbps | | 512 kbps | |
|---|---|---|---|---|---|---|---|---|
| | MPEG-4 | H.264 | MPEG-4 | H.264 | MPEG-4 | H.264 | MPEG-4 | H.264 |
| Hall | 4.25 | 5.89 | 4.86 | 6.22 | 5.28 | 6.45 | 5.55 | 6.60 |
| Mobile | 3.36 | 6.16 | 3.71 | 6.23 | 4.08 | 6.32 | 4.84 | 6.48 |
| Akiyo | 6.07 | 6.65 | 6.22 | 6.76 | 6.33 | 6.84 | 6.53 | 6.99 |
| Tempete | 4.86 | 7.35 | 5.42 | 7.49 | 5.88 | 7.60 | 6.26 | 7.69 |

A particular aspect, which is novel in itself, is the discovery and formulation of the correlation between the objective and subjective results. The statistical approach to identify how the objective and subjective results are related is the correlation coefficient. This correlation coefficient is given by Eq. 5,

$$\rho_{x,y} = \frac{Cov(X,Y)}{\sigma_x . \sigma_y} \quad where, \quad Cov(X,Y) = \frac{1}{n}\sum_{j=1}^{n}(x_j - \mu_x)(y_j - \mu_y) \tag{5}$$

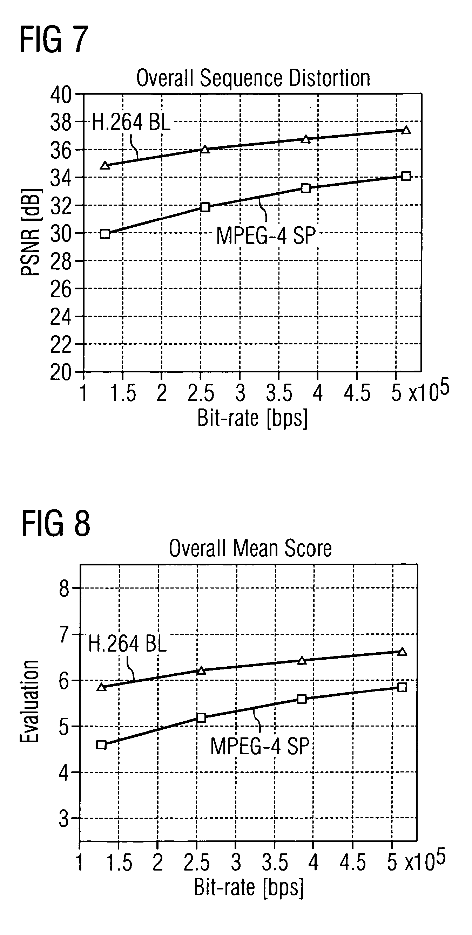

The correlation is a bivariate measure of relationship between two variables, varying between -1 for negative correlation and 1 for linear correlation. In this interval zero stands for random relationship. The overall sequence distortion for the objective assessment is depicted in Fig. 7. Both subjective methods results were correlated with the overall sequence distortion. The correlation values for both approaches revealed a high relationship between the objective and subjective results. It is noteworthy to emphasise the correlation values that indicates almost a linear relationship between the set of variables.

At this point, the overall correlation results can be studied for Method A. From the above, it is seen that the quality assessment disparity has a decreasing behaviour both for PSNR and subjective evaluation. Therefore, the maximum value is attained at 128 kbps (4.9 dB for PSNR and 1.24 in evaluation) and the minimum value at 512 kbps, (3.1 dB for and 0.76 in evaluations). The composite gain H.264 BL facing MPEG-4 SP of 3.83 dB and 0.98 mean score. Most notably H.264 encoded at 256 kbps achieves higher values (35.74 dB) than MPEG-4 SP at 512 kbps (33.92 dB). The subjective evaluation confirm the metrics, on average people scored H.264 BL coded at 256 kbps as 6.21 and MPEG-4 SP coded at 512 kbps as 5.84. The results are depicted in Fig. 8.

The results suggest that for video streaming, accordingly with the 11-grade subjective evaluation scale, if good video quality is aimed 512 kbps are sufficient for H.264 BL but not for MPEG-4 SP, vide Table VII.

TABLE VI. TRADEOFF BETWEEN QUALITY EVALUATION AND BIT RATES

| Video Standard | Quality | | |
|---|---|---|---|
| | Poor | Fair | Good |
| MPEG-4 | >256 kbps | >384 kbps | >512 kbps[2] |
| H.264 | <128 kbps | >128 kbps | >384 kbps |

Contrasted with the foregoing, the overall correlation results of Method B. With Method B, on average, both objective and subjective analysis show that H.264 BL achieves higher quality along the entire bit-rate range. Most notably H.264 BL coded at 256 kbps achieves higher PSNR values (35.74 dB) than MPEG-4 SP at 512 kbps (33.92 dB). The subjective evaluation confirm the metrics, on average people scored H.264 BL coded at 256 kbps as good (6.69) and MPEG-4 SP coded at 512 kbps as fair (5.87) It should be noted that the audience tended not to give very high scores. This is thought to be motivated for a series of reasons, including television quality bias, yet the subjective results show remarkable correlation with the objective metrics. The results suggest that for video streaming, if good (as perceived in this testings) video quality is aimed, less than 256 kbps are necessary for H.264 BL, and nearly twice of that for MPEG-4 SP. These findings are supported by independently conducted tests of diverse nature. Pure statistical analysis is confirmed by subjective evaluation by non-experts.

It should be kept in mind that the compression efficiency remains an important objective. Thus, we examine at this point the bit rate savings of the Methods A and B. The Table VIII resumes the results of the objective results correlated with method A and method B.

TABLE VII. CORRELATION VALUES

| Sequence | Correlation | | | |
|---|---|---|---|---|
| | MPEG-4 SP | | H.264 BL | |
| | Method A | Method B | Method A | Method B |
| Hall | 0.999737 | 0.999669 | 0.999978 | 0.999576 |
| Mobile | 0.999515 | 0.935799 | 0.999981 | 0.930771 |

(continued)

| Sequence | Correlation | | | |
|---|---|---|---|---|
| | MPEG-4 SP | | H.264 BL | |
| | Method A | Method B | Method A | Method B |
| Akiyo | 0.999999 | 0.966322 | 0.993937 | 0.986962 |
| Tempete | 0.999863 | 0.996067 | 0.999773 | 0.994558 |
| Average | 0.999778 | 0.974464 | 0.998417 | 0.977967 |

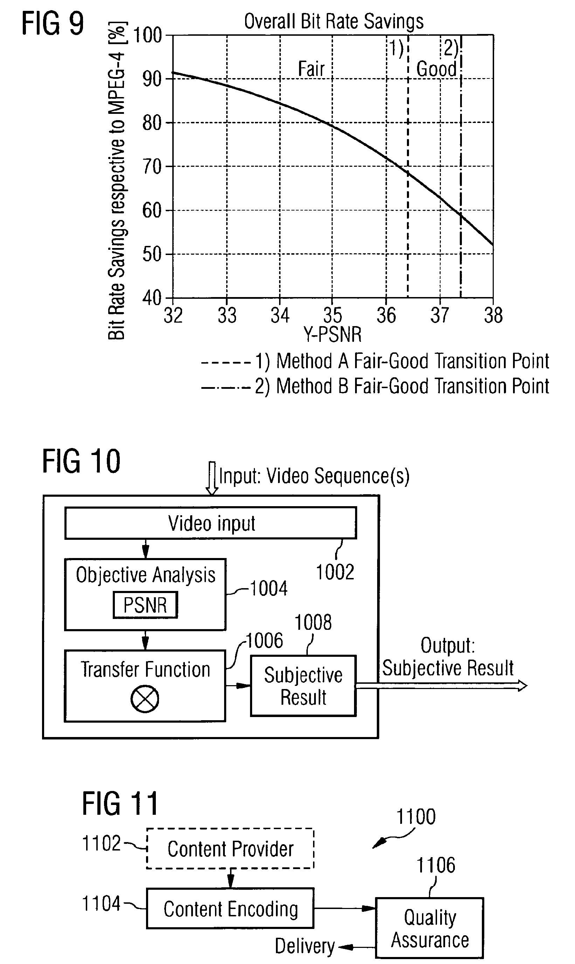

The obtained correlation values indicate an almost linear correlation, so the two variables are tightly related. Therefore, bit rate savings can be obtained using Eq. 6 and are depicted in Fig. 9.

$$\frac{\sum_{x1}^{x2}\frac{g(x)-h(x)}{g(x)}}{\Delta x}$$

$h(x)$, H264 bit rate expression given PSNR $\qquad$ (6)

$g(x)$, MP4 bit rate expression given PSNR

We can now draw some intermediate conclusions, which would be helpful in selecting a protocol. However, it shall be bourn in mind that any protocol can be used with the present invention. The quality estimation focused two video standards at different stages of development. The video standard MPEG-4 is a mature technology, plenty of information and codec implementation exists resulting in functional applications peer-to-peer. As for H.264, it has not yet acquired design maturity and has encoding features/requirements are truly impressive. The results demonstrate that H.264 BL has better quality achievements than MPEG-4 SP turning evident the theoretical premises that point to H.264 as an improved coding approach due to the embracement of novel coding algorithms and a built-in deblocking filter. The rate-distortion curves show that H.264 BL surpasses MPEG-4 SP in all selected sequences. Considering the achieved subjective quality results, H.264 BL proved to be consistent with the objective metrics, thus H.264 BL in baseline mode appears like an important candidate for future video based multimedia applications for cellular mobile networks, due to its remarkable bit rate saving respective to MPEG-4 SP.
The subjective quality assessment revealed to be imporant in determining reference bit-rates to the required target quality while at the same time enabled to qualify the bit rate gains and to give qualitative sense to the results, permitting the choice of a judged as acceptable distortion performance for each video tool.
Thus, the foregoing presents a process to obtain a reproduction of the HVS perception of quality by establishing a correlation between computed PSNR and a subjective score output establishing a deterministic relation between both variables. The process for extracting the subjective results from the objective metric, which is embodied in Figure 10, encompasses the following steps. The video content is input to the video input 1002. The PSNR objective metric is computed by PSNR 1004. This result is presented to a transfer function 1006 from which the subjective result 1008 is extrapolated. Equations 6 and 7 are examples of possible transfer functions that may be used to extrapolate the subjective result for Methods A and B, respectively.

Eq. 6

$$MeanScore_{MPEG4\_SP} = 0.5249\sqrt[\phantom{x}]{\frac{PSNR}{13.37}}$$

Eq. 7

$$MeanScore_{H264\_SP} = 0.5488\sqrt{\frac{PSNR}{13.17}}$$

This process asserts, as formulated above, that the PSNR and the subjective scores are related, therefore, the PSNR rate-distortion curve is highly correlated with the subjective overall mean score curve. The two variables, the PSNR and the mean score, are related by a correlation coefficient as in Eq. 8. If the correlation value has an almost linear correlation, i.e. the value of 1, between both variables it is possible to establish a transfer function and extrapolate the subjective results, from the objective results.

$$\rho_{x,y} = \frac{Cov(X,Y)}{\sigma_x.\sigma_y} \quad where, \quad Cov(X,Y) = \frac{1}{n}\sum_{j=1}^{n}(x_j - \mu_x)(y_j - \mu_y) \tag{8}$$

The correlation coefficients are shown in Table X. The correlation is applied to a set of sequences which apply to a variety of application environments, specifically using different degrees of motion and picture detail. A description of the sequences follows:

- Hall         - static camera, lightning change and localized motion
- Mobile         - High picture detail with camera movements and complex motion
- Akiyo         - Still camera and synthetic background and a news presenter
- Tempete         - Fast random motion with detailed background and camera zoom-out

It should be noted that two approaches for subjective analysis are correlated with the PSNR composite rate-distortion curve, specifically considering a confidence interval of 95% to compensate mean score evaluation error (Method A) and another considering outliers to draw the dispersion curve (Method B).
The obtained correlation values, in Table X, indicate almost linear correlations between both variables therefore the two variables are tightly related thus it is possible to accurately predict the subjective scores from the PSNR.

Table X Correlation between objective and subjective

| Sequence | Correlation | | | |
| | MPEG-4 SP | | H.264 BL | |
| | Method A | Method B | Method A | Method B |
|---|---|---|---|---|
| Hall | 0.999737 | 0.999669 | 0.999978 | 0.999576 |
| Mobile | 0.999515 | 0.935799 | 0.999981 | 0.930771 |
| Akiyo | 0.999999 | 0.966332 | 0.993937 | 0.986962 |
| Tempete | 0.999863 | 0.996067 | 0.999773 | 0.994558 |
| Average | 0.999778 | 0.974464 | 0.998417 | 0.977967 |

Figure 11 illustrates a process 1100 that has possible applications. In step 1102, the content provider transmits a movie of other media content. In step 1104, the content is encoded. In step 1106, the gravity is checked. In this case, this is done after the compression. Using the process depicted in Fig. 11 it is possible to reproduce the HVS because the outcome is a subjective mean score. This could be used, for example, to ascertain video quality (Quality Assurance) in Content Management System (CMS). In this application scenario the process depicted in Fig. 10 can be applied to every input movie in the CMS to perform quality pre-processing before being sent to the delivery network. It should be noted that quality assurance is a requirement from operators and content providers in entertainment and streaming applications to control the Quality of Service (QoS). When a content provider establishes a contract with a service provider it requires that the content is delivered with a determinate quality.

Another application of Fig. 11 could be to define compression requirements to achieve a specific output video quality. This could reveal to be especially important when applied to bandwidth reserved constant bit rate links like ATM CBR class.

While the present invention has been described in terms of specific embodiments, it shall be appreciated that the invention may be modified in practice within the spirit and scope of the present invention.

APPENDIX I.      VIDEOCONFERENCING SCENARIO RATE-DISTORTION RESULTS

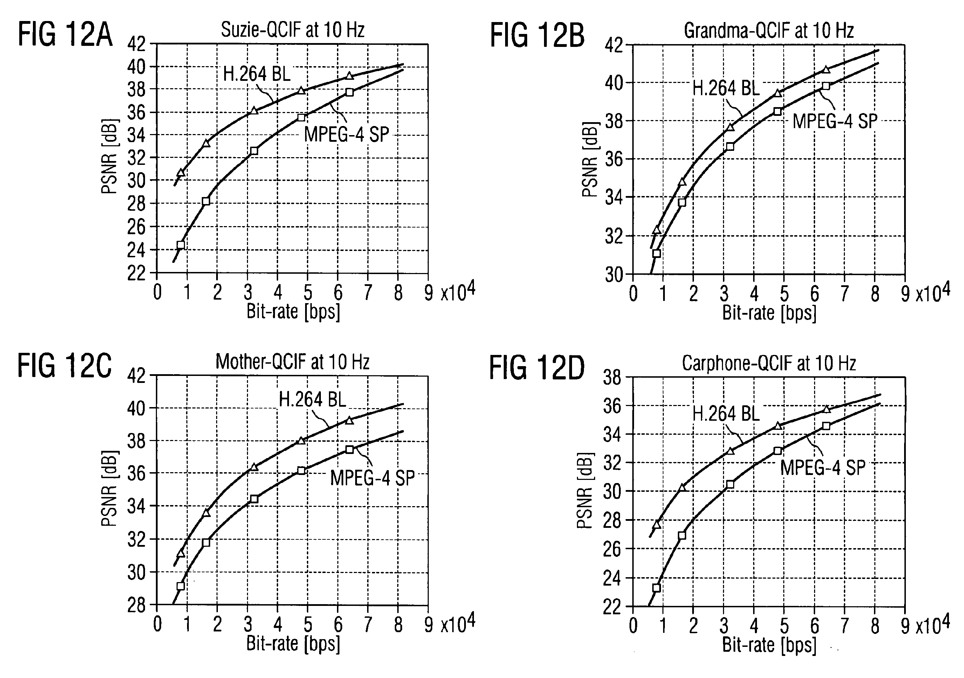

Low resolutions are typically used in videoconferencing applications, thus QCIF at 10 Hz was adopted for the assessment. An Intra period of ten was adopted for both MPEG-4 SP and H.264 BL encodings. Some reference bit-rates were specified according to UMTS downlink common channels capacity. The metric was computed for PSNR *per* frame as in Eq. 1. The rate-distortion curves were attained modelling a power function. The resulting rate-distortion curves are depicted in Fig. 12a-d, from which it is possible to observe that H.264 BL outperforms MPEG-4 SP in all selected sequences.

An intra scenario analysis indicates that the disparity between PSNR values for H.264 BL and MPEG-4 SP diminishes when bit-rate increases. For the 8 kbps, the H.264 BL has an average PSNR 3.4 dB higher than MPEG-4 SP. The average gain of H.264 BL relatively to MPEG-4 SP continuously decreases along the range of reference bit-rate values, until 1.3 dB for 64 kbps. The overall average gain of H.264 BL facing MPEG-4 SP is 2.3 dB. It should be noted that MPEG-4 SP has a higher PSNR standard deviation for the bit-rate interval than H.264 BL, being 4.2 dB and 3.4 dB respectively.

APPENDIX II.    VIDEO CODING ISSUES

*Input Sequences*

Used image sequences are standard test sequences and widely used by several specialized groups including MPEG and VQEG3 for trial analysis. The sequences used for trial analysis intent to represent the rate-distortion efficiency in two different scenarios. These sequences, all in YUV 4:2:0 format, are presented in Table XI. For video streaming applications it was considered that the appropriate spatial and temporal resolution was CIF at 30 Hz.

TABLE VIII.    TEST SEQUENCES FOR VIDEO STREAMING SCENARIO

| Name | Resolution | Frames | Duration | Description |
|---|---|---|---|---|
| Akiyo | CIF | 300 | 10 sec. | Still camera and synthetic background with a news presenter |
| Tempete | CIF | 260 | 8.67 sec. | Fast random motion with detailed background and camera zoom-out |
| Mobile | CIF | 300 | 10 sec. | High picture detail with camera movements and complex motion |
| Hall | CIF | 300 | 10 sec. | Static camera, lighting change and localized motion |

The selected sequences were encoded using MPEG-4 and H.264 encoders, specifically the XviD project simple profile codec, build 04102002-1 and JM version 7.3 reference software.

*Bitrate Control*

Bit-rate control was achieved manipulating the quantization process. The quantization tuning involved changing the quantization parameter allowing the setting of a 'dead-zone',

that is, the input coefficients that at the output are zero and therefore not encoded. Quantization allows manipulating the range of luminance values. The quantization uses a step size quantization parameter. If the step size is large then the range of quantized coefficients is small therefore compression increases though accurateness for coefficients rescaling diminishes causing the deviation of the reconstructed signal. Target bit rates were chosen based on i) expected binary throughputs in downlink shared channels for UMTS, ii) the need to maintain a sufficiently inter value spaced set, in order to obtain rigorous image distortion curves. Table XII shows the quality metrics for CIF input sequences with quantization tuning.

TABLE IX. QUALITY METRICS FOR CIF INPUT SEQUENCES WITH QUANTIZATION TUNING

| Sequence | MPEG-4 SP | | | H.264 Baseline | | |
|---|---|---|---|---|---|---|
| | Quantizer | Bit rate | PSNR-Y | Quantizer | Bit rate | PSNR-Y |
| A: CIF, 30 Hz, 128 kbps | | | | | | |
| Akiyo | 6 | 129.43 | 38.94 | 40 | 73.10 | 38.12 |
| Hall | 13 | 116.33 | 33.56 | 30 | 184.41 | 36.64 |
| Mobile | 31 | 227.73 | 23.30 | 50 | 1058.92 | 32.34 |
| Tempete | 31 | 164.41 | 25.76 | 50 | 783.83 | 33.50 |
| B: CIF, 30 Hz, 256 kbps | | | | | | |
| Akiyo | 4 | 211.35 | 40.31 | 30 | 88.36 | 39.22 |
| Hall | 8 | 245.76 | 35.57 | 20 | 269.05 | 37.50 |
| Mobile | 26 | 285.08 | 24.14 | 40 | 1104.11 | 32.54 |
| Tempete | 20 | 272.12 | 27.62 | 40 | 811.58 | 33.69 |
| C: CIF, 30 Hz, 384 kbps | | | | | | |
| Akiyo | 3 | 301.47 | 41.10 | 20 | 139.91 | 41.84 |
| Hall | 6 | 399.77 | 36.64 | 10 | 488.87 | 37.74 |
| Mobile | 22 | 360.45 | 24.93 | 30 | 1183.74 | 32.96 |
| Tempete | 15 | 402.51 | 28.87 | 30 | 874.37 | 34.06 |
| D: CIF, 30 Hz, 512 kbps | | | | | | |
| Akiyo | 2 | 557.05 | 41.98 | 10 | 298.74 | 43.39 |
| Hall | 5 | 540.67 | 37.21 | 2 | 730.31 | 38.03 |
| Mobile | 16 | 575.08 | 26.55 | 20 | 1332.20 | 33.97 |
| Tempete | 12 | 555.58 | 29.94 | 20 | 1010.05 | 35.00 |

**Claims**

1. A method for measuring quality of video content
   determining an objective quality result of the video content,
   determining a first subjective quality result of the video content,

selecting objective and first subjective quality results that have a substantially linear correlation, and extracting a second subjective quality result using a transfer function from the objective quality result.

2. The method of any of the preceding claims, further comprising the step of determining that the objective and subjective result are correlated according to the correlation coefficient, $\rho_{x,y}$ :

$$\rho_{x,y} = \frac{Cov(X,Y)}{\sigma_x . \sigma_y}$$

where, $Cov(X,Y) = \frac{1}{n}\sum_{j=1}^{n}(x_j - \mu_x)(y_j - \mu_y)$

3. The method of any of the preceding claims, further comprising the step of extracting the second subjective quality result using a transfer function.

4. The method of any of the preceding claims, wherein the transfer function is given according to:

$$MeanScore_{MPEG4\_SP} = 0.5249\sqrt[]{\frac{PSNR}{13.37}}$$

5. The method of any of the preceding claims 1-3, wherein the transfer function is given according to:

$$MeanScore_{H264\_SP} = 0.5488\sqrt[]{\frac{PSNR}{13.17}}$$

6. The method of any of the preceding claims, further comprising the step encoding the video content as a preliminary step.

7. The method of any of the preceding claims, further comprising the step of determining the objective result using a Peak Signal-to-Noise Ratio performance analysis given by:

$$PSNRperframe(x,y) = \left(\sum_{k=0}^{N-1} 20\log_{10}\left(\frac{255}{\sqrt{\frac{1}{mn}\sum_{i=0}^{n}\sum_{j=0}^{n}[V_k(x,y)-V_j(x,y)]^2}}\right)\right)\Bigg/ N$$

where, $V_k(x,y)$ is the luminance values for each pel, $m$ is the number of horizontal pels, $n$ is the number of vertical pels and $N$ are the number of frames.

8. The method of any of the preceding claims, wherein the step of determining the first subjective quality result includes analysing the collected data considering a confidence interval to compensate mean score evaluation error.

9. The method of preceding claim 8, wherein the step of determining the first subjective quality result includes calculating the mean score and the standard deviation and attain trend valves bounded by the confidence interval.

**10.** The method of preceding claim 8, wherein the step of determining the first subjective quality result includes applying a power fitting model based on mean score values and data from outliers filtered bank, outliers being those values that stay out of the confidence interval.

**11.** The method of any of the preceding claims, further comprising the step of ensuring an acceptable bit rate for a predetermined quality resulting in savings.

**12.** The method of claim 11, further comprising the step of determining the bit rate savings according to:

$$\frac{\sum_{x1}^{x2}\frac{g(x)-h(x)}{g(x)}}{\Delta x}$$

where, $h(x)$ is H264 bit rate expression given Peak Signal-to-Noise Ratio (PSNR) and $g(x)$ is MP4 bit rate expression given PSNR.

**13.** A product incorporating the method of any of the preceding claims.

**Amended claims in accordance with Rule 86(2) EPC.**

**1.** A method for measuring quality of video content, comprising the steps of:

determining an objective quality result of the video content,
determining a first subjective quality result of the video content,

**characterized by**:

selecting objective and first subjective quality results that have a substantially linear correlation, and
extracting a second subjective quality result using a transfer function from the objective quality result, the second subjective quality result representing a quality of the video content that reproduces a result of the Human Visual System.

**2.** The method of any of the preceding claims, further comprising the step of determining that the objective and subjective result are correlated according to the correlation coefficient, $\rho_{x,y}$ :

$$\rho_{x,y} = \frac{Cov(X,Y)}{\sigma_x.\sigma_y}$$

where, $Cov(X,Y) = \frac{1}{n}\sum_{j=1}^{n}(x_j-\mu_x)(y_j-\mu_y)$

**3.** The method of any of the preceding claims, further comprising the step of further comprising the step of extracting the second subjective quality result using a transfer function.

**4.** The method of any of the preceding claims, wherein the transfer function is a mean score based on a PSNR.

**5.** The method of any of the preceding claims, wherein the transfer function is given according to:

$$MeanScore_{MPEG4\_SP} = 0.5249 \sqrt[3]{\frac{PSNR}{13.37}}$$

**6.** The method of any of the preceding claims 1-3, wherein the transfer function is given according to:

$$MeanScore_{H264\_SP} = 0.5488 \sqrt[3]{\frac{PSNR}{13.17}}$$

**7.** The method of any of the preceding claims, further comprising the step of further comprising the step of encoding the video content as a preliminary step.

**8.** The method of any of the preceding claims, further comprising the step of determining the objective result using a Peak Signal-to-Noise Ratio performance analysis given by:

$$PSNRperframe(x,y) = \left( \sum_{i=0}^{N-1} 20 \log_{10} \left( \frac{255}{\sqrt{\frac{1}{nm}\sum_{i=0}^{n}\sum_{j=0}^{m}\left[ V_i(x,y) - V_j(x,y) \right]^2}} \right) \right) \Big/ N$$

where, $V_k(x,y)$ is the luminance values for each pel, m is the number of horizontal pels, n is the number of vertical pels and N are the number of frames.

**9.** The method of any of the preceding claims, wherein the step of determining the first subjective quality result includes analysing the collected data considering a confidence interval to compensate mean score evaluation error.

**10.** The method of preceding claim 9, wherein the step of determining the first subjective quality result includes calculating the mean score and the standard deviation

**11.** The method of preceding claim 9, wherein the step of determining the first subjective quality result includes applying a power fitting model based on mean score values and data from outliers filtered bank, outliers being those values that stay out of the confidence interval.

**12.** The method of any of the preceding claims, further comprising the step of ensuring an acceptable bit rate savings.

**13.** The method of claim 12, further comprising the step of determining the bit rate savings according to:

$$\frac{\sum_{n1}^{n2} \frac{g(x) - h(x)}{g(x)}}{\Delta x}$$

where, **h(x)** is H264 bit rate expression given Peak Signal-to-Noise Ratio (PSNR) and **g(x)** is MP4 bit rate expression given PSNR.

**14.** A product (1004-1006) for determining an objective quality result of the video content, by determining a first subjective quality result of the video content,
**characterized by**
selecting objective and first subjective quality results that have a substantially linear correlation, and extracting a second subjective quality result using a transfer function from the objective quality result, the second subjective quality result representing a quality of the video content that reproduces a result of the Human Visual System.

# FIG 1

Bad  Poor  Fair  Good  Exce-
llent

1  2  3  4  5  6  7  8  9  10 11

Reference Voting Reference Voting
sequence time sequence time
N N+1

Bad  Poor  Fair  Good  Excellent

# FIG 2

## FIG 3

Pedestrian A

Block Error Rate [BLER]

$10^{-1}$

$10^{-2}$

$10^{-3}$

0    5    10    15    20    25

Eb/No [dB]

CQI 4
CQI 5
CQI 6
CQI 7
CQI 8
CQI 9
CQI 10

EP 1 763 248 A1

FIG 4B

Aklyo-CIF at 30 Hz
H.264 BL
MPEG-4 SP
Bit-rate [bps]
PSNR [dB]

FIG 4D

Tempete-CIF at 30 Hz
H.264 BL
MPEG-4 SP
Bit-rate [bps]
PSNR [dB]

FIG 4A

Hall-CIF at 30 Hz
MPEG-4 SP
H.264 BL
Bit-rate [bps]
PSNR [dB]

FIG 4C

Mobile-CIF at 30 Hz
H.264 BL
MPEG-4 SP
Bit-rate [bps]
PSNR [dB]

23

FIG 5B

FIG 5D

FIG 5A

FIG 5C

FIG 6A — Hall-CIF at 30 Hz

FIG 6B — Akiyo-CIF at 30 Hz

FIG 6C — Hall-CIF at 30 Hz

FIG 6D — Tempete-CIF at 30 Hz

## FIG 7

Overall Sequence Distortion

H.264 BL

MPEG-4 SP

PSNR [dB]

Bit-rate [bps]

## FIG 8

Overall Mean Score

H.264 BL

MPEG-4 SP

Evaluation

Bit-rate [bps]

FIG 9

Overall Bit Rate Savings

Bit Rate Savings respective to MPEG-4 [%]

Fair    1)    2)
        Good

Y-PSNR

- - - - - 1) Method A Fair-Good Transition Point
— · — · — 2) Method B Fair-Good Transition Point

FIG 10

Input: Video Sequence(s)

Video input

1002

Objective Analysis — 1004

PSNR

1008

Transfer Function — 1006

$\otimes$

Subjective Result

Output:
Subjective Result

FIG 11

1100

1102 — Content Provider

1106

1104 — Content Encoding

Quality Assurance

Delivery

FIG 12A Suzie-QCIF at 10 Hz

FIG 12B Grandma-QCIF at 10 Hz

FIG 12C Mother-QCIF at 10 Hz

FIG 12D Carphone-QCIF at 10 Hz

EP 1 763 248 A1

**European Patent Office**

**EUROPEAN SEARCH REPORT**

Application Number

EP 05 01 9887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTINS N ET AL: "A Video Compression Tools Comparison for Videoconferencing and Streaming Applications for 3.5G Environments" 11TH INTERNATIONAL CONFERENCE ON TELECOMMUNICATIONS AND NETWORKING (ICT 2004). PROCEEDINGS. LNCS 3124, 1 August 2004 (2004-08-01), - 6 August 2004 (2004-08-06) pages 1007-1012, XP019009219 Springer, Berlin, Germany ISBN: 3-540-22571-4 | 1-3,6,7, 13 | H04N7/26 |
| A | * the whole document * | 8-10 | |
| X | JAVUREK R: "Efficient Models for Objective Video Quality Assessment" RADIOENGINEERING, vol. 13, no. 4, December 2004 (2004-12), pages 48-50, XP002371070 ISSN: 1210-2512 * abstract * * page 48, left-hand column, line 22 - line 29 * * page 49, right-hand column, line 9 - page 50, left-hand column, line 12 * * figures 4,5 * | 1-3,6-8, 13 | |
| X | LIN F-H ET AL: "A CONSTANT SUBJECTIVE QUALITY MPEG ENCODER" 1995 INTERNATIONAL CONFERENCE ON ACOUSTICS, SPEECH, AND SIGNAL PROCESSING (ICASSP 1995). PROCEEDINGS, vol. 4, 9 May 1995 (1995-05-09), - 12 May 1995 (1995-05-12) pages 2177-2180, XP010151769 IEEE, New York, US ISBN: 0-7803-2431-5 * the whole document * | 1-3,6,13 | |

**TECHNICAL FIELDS SEARCHED (IPC)**

H04N

-/--

The present search report has been drawn up for all claims

| Place of search | Date of completion of the search | Examiner |
|---|---|---|
| Berlin | 9 March 2006 | Sampels, M |

EPO FORM 1503 03.82 (P04C01)

European Patent
Office

**EUROPEAN SEARCH REPORT**

Application Number

EP 05 01 9887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ESKICIOGLU A M: "QUALITY MEASUREMENT FOR MONOCHROME COMPRESSED IMAGES IN THE PAST 25 YEARS" 2000 IEEE INTERNATIONAL CONFERENCE ON ACOUSTICS, SPEECH, AND SIGNAL PROCESSING (ICASSP 2000). PROCEEDINGS, vol. 6, 5 June 2000 (2000-06-05), - 9 June 2000 (2000-06-09) pages 1907-1910, XP010504664 IEEE, Piscataway, US ISBN: 0-7803-6293-4 * the whole document * ----- | 1-13 | |
| A | TAN S H ET AL: "Classified Perceptual Coding with Adaptive Quantization" IEEE TRANSACTIONS ON CIRCUITS AND SYSTEMS FOR VIDEO TECHNOLOGY, vol. 6, no. 4, August 1996 (1996-08), pages 375-388, XP000599293 IEEE, Piscataway, US ISSN: 1051-8215 * abstract * * page 387, left-hand column, line 10 - page 388, left-hand column, line 5 * * figure 15 * ----- -/-- | 11,12 | TECHNICAL FIELDS SEARCHED (IPC) |

The present search report has been drawn up for all claims

| Place of search | Date of completion of the search | Examiner |
|---|---|---|
| Berlin | 9 March 2006 | Sampels, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 05 01 9887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YONG WANG ET AL: "CONTENT-BASED UTILITY FUNCTION PREDICTION FOR REAL-TIME MPEG-4 VIDEO TRANSCODING" 2003 INTERNATIONAL CONFERENCE ON IMAGE PROCESSING (ICIP 2003). PROCEEDINGS, vol. 2 of 3, 14 September 2003 (2003-09-14), - 17 September 2003 (2003-09-17) pages 189-192, XP010669820 IEEE, New York, US ISBN: 0-7803-7750-8 * abstract * * page 189, left-hand column, line 38 - line 45 * * page 190, right-hand column, line 5 - line 28 * * page 191, left-hand column, line 20 - line 26 * * figures 1,2,4 * | 1,3,6,13 | |
| L | PALMER P: "Family films" SCRIPTWRITER, no. 11, July 2003 (2003-07), pages 30-33, XP002371073 Scriptease, London ISSN: 1475-5157 * the whole document * * page 31, right-hand column, line 7 - line 12 * * page 32, right-hand column, line 57 - page 33, middle column, last line * Document is cited because "measuring quality of video content" can also be read as analysing whether a film might be successful. | | TECHNICAL FIELDS SEARCHED (IPC) |

The present search report has been drawn up for all claims

| Place of search | Date of completion of the search | Examiner |
|---|---|---|
| Berlin | 9 March 2006 | Sampels, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .......................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RICHARDSON, I.** H.264 and MPEG-4. Wiley, 2003
- The Handbook of Video Databases: Design and Applications. CRC Press, September 2003, 1041-1078
- Methodology for the subjective assessment of the quality of television pictures (Question ITU-R 211/11. *Rec. ITU-R BT.500-11,* 2002
- **LING, R.** We release them by little: maturation and gender identity as seen in the use of mobile telephony, Historical, Societal and Professional Prespectives. *Proceedings. 1999 International Symposium,* 29 July 1999

- **PEREIRA, F. ; EBRAHIMI, T.** The MPEG-4 Book. Prentice Hall PTR, 2002
- **PATRICK BRUN ; GERT HAUSKE ; THOMAS STOCKHAMMER.** Subjective Assessment of H.264/AVC Video for Low-Bitrate Multimedia Messaging Services. *IEEE International Conference on Image Processing,* 2004
- **GERT HAUSKE ; THOMAS STOCKHAMMER ; ROLF HOFMAIER.** Subjective Image Quality of Low-Rate and Low-Resolution Video Sequences. *8th International Workshop on Mobile Multimedia Communications,* 2003